# FASCICULE DE BREVET EUROPEEN

(11) **EP 0 890 056 B1**
(45) Date de publication et mention de la délivrance du brevet: **01.03.2000**
(21) Numéro de dépôt: 97919439.6
(22) Date de dépôt: 28.03.1997
(51) Int. Cl.: F16L 59/06, F16L 59/14, F16L 39/00

(54) **TUYAU POUR CANALISATIONS DU TYPE A DOUBLE ENVELOPPE D'ISOLATION THERMIQUE**
LEITUNGSROHR DES TYPS DOPPELWÄRMEDÄMPFUNGSMANTEL
LINE PIPE WITH A DOUBLE HEAT-INSULATING CASING

(30) Priorité: 29.03.1996 FR 9604812
(43) Date de publication de la demande: 13.01.1999
(73) Titulaire: ITP, 78430 Louveciennes (FR)
(72) Inventeur: VILLATTE, Ludovic, F-78400 Chatou (FR)
(74) Mandataire: Célanie, Christian
(86) Numéro de dépôt international: FR9700564
(87) Numéro de publication internationale: WO9737166

(56) Documents cités:
- AT-B- 378 834
- DE-A- 2 844 223
- FR-A- 2 613 814
- GB-A- 2 269 876
- US-A- 2 930 407
- US-A- 3 410 313

## Description

La présente invention concerne la conception et la réalisation des tuyaux à double enveloppe, tels notamment que ceux qui sont destinés à être raccordés bout à bout pour constituer des canalisations, ou qui sont plus particulièrement construits pour former des canalisations à poser au fond des mers, pour servir à véhiculer des produits pétroliers, sous forme liquide et/ou gazeuse.

Pour cette application comme pour d'autres applications industrielles analogues, elle apporte perfectionnement aux tuyaux qui, d'une manière générale, sont prévus à double enveloppe d'isolation thermique ménageant un espace annulaire étanche entre deux tubes coaxiaux.

Un problème constant dans la réalisation de tels tuyaux vient du besoin d'une bonne isolation thermique entre l'intérieur et l'extérieur du tuyau, au moins en certaines périodes de la vie d'une canalisation les utilisant. En effet, et à titre d'exemple, les canalisations sous-marines véhiculant des produits pétroliers se trouvent à température froide dans les fonds marins (normalement entre 0 et 20 °C), alors que les fluides véhiculés doivent souvent pouvoir se présenter à température relativement élevée (comprises entre 100 et 200 °C suivant les prescriptions usuelles). Et même lorsque cette température diminue au cours de la vie d'un champ producteur, le fluide doit conserver une température minimale (par exemple 40 °C) jusqu'au lieu de destination en bout de la canalisation, afin d'éviter la formation de condensats solides.

D'autre part, les distances à parcourir sont considérables. Elles se chiffrent en dizaines de kilomètres. La qualité d'isolation thermique doit en plus perdurer pendant de longues années d'utilisation des canalisations. En tant qu'autres impératifs de la pratique, on peut souligner que cette capacité d'isolation thermique ne doit pas souffrir des opérations d'assemblage des canalisations au cours desquelles des tuyaux successifs sont raccordés bout à bout, ni des opérations de mise en place d'une canalisation ainsi formée, progressivement plongée dans la mer, ni encore des conditions de transport entre une usine de fabrication des tuyaux et le site de pose de la canalisation.

D'autres difficultés sont liées aux conditions de fabrication des tuyaux, aux tolérances dimensionnelles inévitables pour les tubes, compte tenu de leur nature (généralement de l'acier) et de leur diamètre (généralement compris entre 100 et 700 millimètres), et à la réalisation des étanchéités. L'une des solutions qui ait été proposée à l'industrie pétrolière consiste à créer un vide poussé dans l'espace annulaire entre les deux tubes coaxiaux d'un tuyau à double enveloppe. On comprend que dans ce cas, la réalisation des étanchéités est particulièrement délicate, et que tant le degré de vide que l'épaisseur sous vide nécessaire grèvent lourdement le coût des tuyaux.

Les mêmes impératifs de degré d'isolation thermique et de durabilité se retrouvent dans d'autres applications, en particulier dans des situations où l'on rencontre un différentiel de température de même ordre de grandeur entre intérieur et extérieur du tuyau, mais en sens inverse.

Dans le souci notamment de diminuer les coûts et d'améliorer la qualité et la durabilité de l'isolation thermique, la présente invention propose un tuyau à double enveloppe d'isolation thermique, qui se caractérise en ce que, dans un espace annulaire étanche entre un tube interne et un tube externe disposés coaxialement l'un dans l'autre, il comporte une plaque autoportante de matériau microporeux à pores ouverts, présentant une flexibilité suffisante pour être enroulée contre le tube interne, et en ce qu'il est réservé hors ledit matériau dans ledit espace annulaire, un passage libre à une circulation longitudinale de gaz par lequel on fait régner une pression réduite tout au long dudit espace annulaire.

Suivant un mode de réalisation préféré de l'invention un tel passage se présente sous la forme d'une couche annulaire laissée libre entre la plaque de matériau microporeux et la paroi interne du tube interne.

Cette forme de réalisation se prête particulèrement bien aux tuyaux dont la fabrication prévoit l'enfilage du tube interne (qui sera ici préalablement équipé du matériau microporeux plaqué contre lui) à l'intérieur d'un tube externe existant. Tel est en général le cas pour les tuyaux utilisant des tubes d'acier pour limiter la double enveloppe.

En variante il peut apparaître préférable de constituer le tube externe en le fermant plaqué contre le matériau microporeux, ou en le réalisant par durcissement sur place d'une matière telle qu'une composition de résine organique, appliquée sur le matériau microporeux par projection, immersion, extrusion, ou autre technique analogue. Dans un tel contexte, il peut se révéler malcommode de réserver une couche annulaire complète libre à une circulation gazeuse longitudinale. Une telle couche pourra alors être remplacée par des conduits insérés en surface du matériau microporeux, avant par exemple de noyer l'ensemble dans une enveloppe de matière plastique, ou en évitant de fermer les plaques de matériau microporeux bord à bord, de sorte à laisser libre un passage suivant une génératrice du tuyau.

Un matériau particulièrement approprié pour le tuyau de l'invention est représenté par les plaques d'isolant microporeux à base d'une matière céramique, et préférentiellement à base de silice, telles qu'elles existent dans le commerce, où elles sont produites notamment par la société Micropore International Ltd sous la marque Microtherm.

Le matériau de ces plaques est fait d'un mélange de poudre silicique et de fibres de renforcement céramiques, le tout compacté en une structure tridimensionnelle cohérente de fines particules qui est retenue dans une enveloppe non étanche. Cette dernière est couramment constituée d'un tissu de fibres minérales liées en un réseau de fibres croisées non tissées, notamment en fibres de verre, mais il sera plus économique de préférer pour l'invention un tissu de coton, en englobant ici le cas de fibres de coton liées ensemble sans véritable tissage.

Du point de vue chimique, il s'agit, du moins pour la structure microporeuse silicique (sans tenir compte de son enveloppe), d'un mélange dont la majeure partie est formée de silice mais qui contient aussi une mineure partie de dioxyde de titane.

Dans l'application qui est faite suivant l'invention de ce genre de plaques isolantes, la présence de dioxyde de titane apporte au matériau microporeux un pouvoir anti-radiatif que l'on exploite au voisinage du tube interne, celui qui est porté à température élevée dans les canalisations. A ce sujet, il est intéressant d'observer que l'on sait fabriquer des matériaux microporeux à base de gel de silice pyrogéné dans lesquels la proportion de dioxyde de titane dépasse 20 % en poids du poids total, jusqu'à atteindre environ 30 à 35 % en poids pour 60 à 70 % en poids de silice, si l'on néglige les parts mineures d'autres oxydes minéraux qui représentent au total moins de 5 % en poids.

Ces matériaux sont également avantageux dans le cadre de la présente invention par le fait qu'ils se caractérisent par une porosité ouverte et un diamètre de pores inférieur ou, au plus, égal à 0,1 micron. Dans le langage du métier utilisé ici, la porosité est dite ouverte quand les pores ouverts en communication les uns avec les autres représentent la quasi-totalité des pores que la structure microporeuse comporte, soit en pratique de l'ordre de 85 à 95 % en volume du volume global des pores, qui est lui-même de l'ordre de 80 % du volume apparent.

Toutes les applications qui ont été recommandées à ce jour pour les matériaux microporeux essentiellement constitués de particules siliciques, notamment de gel de silice pyrogéné, exploitent le fait que le diamètre des pores ouverts est inférieur au libre parcours moyen des molécules d'air, ce qui assure pour l'essentiel une capacité d'isolation thermique bien supérieure à celle de matériaux plus traditionnels, en particulier de ceux qui sont fabriqués de sorte à ménager principalement des pores fermés.

A l'inverse de ces applications connues, la présente invention conduit à améliorer encore leurs performances en exploitant le fait que les pores sont ouverts pour créer un vide partiel tout au sein du matériau.

De ce fait, l'invention permet de sélectionner des épaisseurs de matériau microporeux qui deviennent suffisantes à apporter leur propre pouvoir isolant dans des limites satisfaisantes tout en restant dans le cadre des impératifs économiques de fabrication et mise en oeuvre des canalisations, alors même qu'un tel matériau est en soi très coûteux.

Dans le même temps, il découle de l'invention que l'on peut se contenter d'un vide partiel, se traduisant préférentiellement par une pression réduite comprise entre 0,5 millibar et 100 millibars. Ces conditions sont beaucoup plus faciles à réaliser, pour un coût bien moindre, que les degrés de vide poussé proposés antérieurement pour des tuyaux à double enveloppe d'isolation thermique.

Par, entre autres, l'augmentation du libre parcours moyen des molécules gazeuses qui en résulte, on parvient à augmenter le pouvoir isolant d'un facteur allant de 2 à 10, suivant la valeur de pression réduite choisie et suivant les conditions thermiques en positionnement.

Il est remarquable en outre que, suivant l'invention, l'épaisseur occupée par la plaque de matériau microporeux dans l'espace annulaire entre les deux tubes coaxiaux laisse libre un passage de circulation laminaire d'air qui facilite une aspiration créant la pression réduite en la répercutant tout au long du tuyau à partir d'une extrémité de celui-ci. De plus, les exigences posées pour la réalisation des étanchéités s'en trouvent moins sévères, ce qui contribue à faciliter les conditions de fabrication et de transport des tuyaux vers le lieu de mise en place des canalisations et à réduire les coûts.

D'une manière générale, on peut observer qu'il suffit de laisser une épaisseur moyenne de l'ordre de 0,5 à 5 mm à une couche de l'espace annulaire laissée libre du côté du tube externe par le matériau microporeux, pour que les opérations de création de la pression réduite soient efficaces à évacuer l'air contenu d'origine dans les pores du matériau isolant microporeux. Cet effet peut s'expliquer par le fait que l'action d'aspiration s'exerce radialement à travers l'épaisseur de matériau microporeux en toute section transversale du tuyau, tandis que l'air circule aisément dans le sens longitudinal dans l'espace laissé libre.

L'épaisseur utile de ce dernier se révèle en pratique du même ordre de grandeur que celles qui correspondent aux tolérances de fabrication des tubes eux-mêmes et aux besoins technologiques relevant de la fabrication d'un tel tuyau par enfilage d'un tube externe pré-constitué par dessus le tube interne équipé de la couverture constituée par la plaque de matériau microporeux.

Un autre avantage important de la présente invention réside dans le fait que le coefficient d'isolation thermique obtenu par la combinaison du matériau microporeux avec la création d'une pression réduite, à la fois dans le matériau microporeux lui-même et dans l'épaisseur laissée libre dans l'espace annulaire entre les deux tubes coaxiaux, permet de réduire sensiblement l'épaisseur totale de cet espace annulaire, donc les dimensions du tube externe pour une même section utile du tube interne et des contraintes d'isolation thermique similaires.

On peut ainsi observer qu'une épaisseur de matériau microporeux de 10 mm est suffisante pour satisfaire aux exigences des canalisations conduisant des produits pétroliers à travers les fonds marins dans bien des cas d'application pratique. Dans d'autres cas, il sera possible d'augmenter cette épaisseur jusqu'à une valeur se situant avantageusement dans la gamme des 5 mm à 30 mm, et préférentiellement de 10 mm à 20 millimètres.

Dans la pratique toutefois, il se présente des situations où l'épaisseur de l'espace annulaire entre les deux tubes coaxiaux ne peut être ramenée à moins de 10 à 15 mm pour d'autres raisons d'ordre technologique, notamment pour permettre l'accès à des machines de soudage pour fermer l'enveloppe annulaire de manière étanche aux extrémités du tuyau et/ou pour permettre cette fermeture par des moyens n'entraînant pas de transferts thermiques exagérés entre les tubes. Dans ce cas, on choisira avantageusement l'épaisseur de la plaque de matériau microporeux à une valeur couvrant de 30 à 95 % de l'espace annulaire entre les deux tubes coaxiaux, cette gamme se situant préférentiellement dans l'ordre de 50 à 80 %. On peut considérer que dans ce genre de situation, le diamètre interne du tube extérieur est le plus souvent de 25 à 50 mm supérieur au diamètre de la paroi externe du tube interne.

Dans le paragraphe précédent et dans ce qui va suivre, on se réfère à un cas préféré d'application de l'invention dans lequel des tuyaux individuellement préfabriqués sont transportés ainsi sur le site de mise en place de la canalisation, où celle-ci est alors assemblée par raccordement de tuyaux successifs bout à bout. D'autre part, on s'intéresse spécialement à de tels tuyaux dans lesquels les deux tubes co-axiaux sont des tubes métalliques qui sont enfilés l'un dans l'autre avant de fermer l'enveloppe intermédiaire aux deux extrémités du tuyau.

On remarquera, à ce sujet, que l'utilité de faire intervenir pour cela la présence d'une virole intermédiaire doublement fixée, de manière étanche, d'une part sur le tube interne, d'autre part sur le tube externe, en chacune des extrémités des tuyaux préfabriqués, se fait surtout sentir lorsque ces tuyaux sont de longueur relativement faible, par exemple fixée à 12 m ou 24 m, alors que pour des tuyaux de plus grande longueur, on est plus aisément conduits à négliger le risque de fuites thermiques minimes qui peuvent se produire à l'endroit des raccords entre les tuyaux soudés bout à bout. Une telle virole est de préférence de nature métallique et fixée par soudage, mais dans d'autres cas, on peut avantageusement utiliser une virole en élastomère que l'on colle sur chacun des tubes.

Dans la mesure où les températures élevées que le matériau microporeux doit être capable de supporter restent de l'ordre de grandeur de 100 à 200 °C, donc bien inférieures à celles des applications connues de ce type de matériau, il est avantageux de remplacer l'enveloppe non étanche qui enferme le matériau silicique lui-même par un tissu à base de coton plutôt qu'un tissu à base de fibres de verre ou autres fibres céramiques. Par la notion de tissu ici employée, on entend couvrir les réseaux où les fibres ne sont pas véritablement tissées entre elles, conformément à ce que l'on désigne couramment sous les termes de tissus non tissés.

Par ailleurs, on pourra trouver intérêt à utiliser ce type d'isolant thermique sous la forme de bandes planes parallèles réunies entre elles par le tissu enveloppe, en disposant ces bandes longitudinalement sur le tube interne du tuyau de l'invention. Mais le plus souvent, il sera plus avantageux d'éviter la création de ponts thermiques suivant des génératrices du tuyau en prévoyant d'enrouler autour du tube interne une plaque unique fabriquée sous épaisseur constante dont les bords se rejoignent.

En effet, sous les épaisseurs utiles suivant l'invention et pour les diamètres de tubes utilisés dans la pratique des canalisations envisagées, les plaques de matériau microporeux disponibles dans le commerce comme étant des plaques planes présentent une flexibilité suffisante pour pouvoir s'enrouler sans difficulté en étant plaquées contre le tube interne.

Comme on l'a déjà indiqué, les plaques de matériau microporeux sont néanmoins auto-portantes, ce qui fait qu'en général, il ne sera pas nécessaire de fixer les bords de la plaque tout au long d'une génératrice du tube interne, et que l'on pourra préférentiellement se contenter d'une fixation bord à bord de place en place, à assurer notamment au moyen de bandages auto-collants.

Des explications qui précèdent comme de celles qui suivront, on doit comprendre que l'invention met à profit les particularités des plaques isolantes à base de silice en microporosité à porosité ouverte et en flexibilité dans les dimensions utiles, plus que leur capacité connue de résister à de très fortes températures de par leur nature céramique.

En conséquence, l'homme de l'art saura choisir des matériaux équivalents, sans sortir du cadre de la présente invention. En cela il pourra notamment avoir recours à des matériaux microporeux à base de résine organique polymérisée, plutôt qu'à base de composés minéraux, ou à des matériaux fabriqués à partir d'une composition comportant plus ou moins de particules fines homogènes dans leurs dimensions ou plus ou moins de fibres comme dans les feutres.

Par ailleurs, la pression réduite créée n'est pas nécessairement sous atmosphère d'air. Au contraire, il peut être plus avantageux de remplacer l'air rémanent par un autre gaz, tel que l'argon, par une opération de substitution par balayage qui, là encore, ne demande pas de passer par l'intermédiaire d'un vide poussé.

Conformément à l'une de ses caractéristiques secondaires, l'invention prévoit de doubler extérieurement la plaque de matériau microporeux d'une feuille de protection capable d'éviter sa détérioration lors de l'enfilage des tubes coaxiaux l'un dans l'autre. Un exemple préféré d'une telle feuille est constitué par une feuille de matériau organique, notamment en résine de polyester telle que le polyéthylène.

On peut la rendre en contact intime avec le matériau microporeux soit par sa capacité propre de rétraction, soit par un effet de vide évitant que lors de l'enfilage d'un tube externe préalablement formé par-dessus le tube interne équipé des plaques de matériau microporeux, cette feuille puisse former des bourrelets et entraîner des bourrages.

Dans certains cas, il sera aussi des plus utiles qu'une telle feuille présente un faible coefficient de friction en surface, spécialement par sa surface tournée vers le tube externe, afin de ne pas gêner les déplacements relatifs ponctuels qu'entraînent l'enroulement d'un tuyau sur lui-même et son déroulement sur le site de pose de la canalisation à laquelle il est destiné.

Dans d'autres applications, on pourra préférer apposer ainsi, en surface extérieure du matériau microporeux, une feuille réalisée en un autre matériau, et plus particulièrement une feuille aluminisée présentant vers l'extérieur une surface tendant à éviter les transferts thermiques de type radiatif.

De manière similaire, on pourra trouver intérêt à revêtir le tube interne d'une couche anti-radiative en sous face du matériau microporeux. Toutefois, il semble que d'une manière générale, l'efficacité de l'isolation procurée par l'invention permet avantageusement d'éviter le surcoût que de telles couches peuvent impliquer.

Suivant encore une autre caractéristique de l'invention, il est avantageusement prévu des espaceurs ayant pour finalité d'assurer un centrage du tube interne dans le tube externe en maintenant un espace minimal convenable entre tube interne et tube externe de bout en bout le long du tuyau. De tels espaceurs sont réalisés de manière classique par des demi-coquilles serrées ensemble en position fixe sur le tube interne du tuyau.

Dans le cadre de la présente invention, on pourra en général éviter de disposer de tels espaceurs par-dessus le matériau microporeux, et les disposer au contraire en position stable directement sur le tube interne, de telle sorte qu'ils forment simultanément une butée longitudinale s'intercalant entre deux plaques de matériau microporeux se succédant sur la longueur du tuyau.

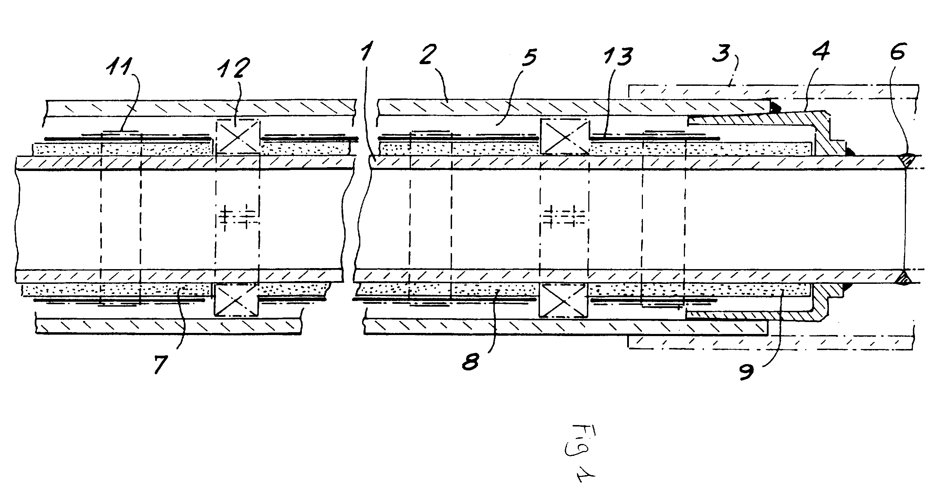

Les différentes caractéristiques de l'invention apparaîtront plus clairement avec leurs avantages respectifs au cours de la description ci-après d'un exemple de mise en oeuvre particulier illustré par la figure unique des dessins annexés.

Cette figure montre en coupe longitudinale partielle un tuyau à double enveloppe suivant l'invention, qui comporte donc un tube interne 1 enfilé coaxialement dans un tube externe 2, tel qu'il est préfabriqué en usine pour être transporté sur le site d'utilisation où des tuyaux identiques successifs sont raccordés bout à bout pour constituer une canalisation plongée en mer.

On a fait apparaître schématiquement un manchon 3 que l'on ajoute alors au niveau du raccord entre deux tuyaux soudés bout à bout par leurs tubes internes 1 respectifs.

On a représenté également une virole intermédiaire 4, que l'on retrouve à chaque extrémité du tuyau et qui ferme en ces deux extrémités une espace annulaire étanche 5 compris entre les deux tubes.

Cette virole 4, de forme générale conique, qui constitue ce que l'on appelle une tulipe d'extrémité dans le métier, est soudée de manière étanche d'une part sur le tube interne 2, en laissant dépasser une zone suffisante de celui-ci pour la réalisation de la soudure 6, et d'autre part à l'intérieur de l'extrémité en retrait du tube externe 2.

Sur la même figure, on voit des plaques de matériau microporeux 7, 8, 9, qui sont enroulées autour du tube interne 1 et dimensionnées pour que leurs bords opposés se rejoignent suivant une génératrice de ce tube, ainsi que des bandages ou colliers 11, formés de simples bandes de papier auto-collant, qui les retiennent serrées bord à bord plaquées contre la paroi externe du tube 1.

On y voit aussi que, dans le sens de la longueur du tuyau, les plaques 7, 8, 9 sont séparées les unes des autres par des espaceurs 12 intercalés entre elles. Ceux-ci sont constitués par des demi-coquilles fixées l'une à l'autre en position ferme serrée contre le tube interne 1. Ils sont réalisés notamment en une matière organique moulée. Leur diamètre extérieur est inférieur au diamètre intérieur du tube externe 2, afin de ne pas gêner l'enfilage des deux tubes 1 et 2 l'un dans l'autre malgré les variations d'épaisseurs de paroi et de rotondité qui sont habituellement tolérées dans la fabrication de ce genre de tubes.

Les espaceurs 12 ainsi réalisés combinent la fonction de centrage transversal du tube interne 1 à l'intérieur du tube externe 2 avec une fonction de butée entre les plaques successives de matériau microporeux dans le sens longitudinal. Ils constituent en outre des éléments de renforcement mécanique reportant directement sur le tube interne plutôt que par l'intermédiaire des plaques isolantes les efforts de flexion que le tuyau peut avoir à supporter lors de la pose en mer.

Dans l'exemple de réalisation illustré ici, le matériau microporeux est constitué par une plaque d'isolant thermique à base de gel de silice pyrogéné enfermé dans une enveloppe de tissu de coton.

Il s'agit plus précisément d'une plaque fabriquée par la société Micropore International Ltd sous la marque Microtherm, dans laquelle la structure microporeuse de silice contient environ 65 % de silice et environ 32 % de dioxyde de titane, le reste de la composition en poids étant constitué par de l'alumine et des traces de différents autres oxydes métalliques ou alcalino-terreux, provenant notamment d'alumino-silicates constituant la matière des fibres réticulant les particules de silice.

En se référant toujours à l'exemple particulier décrit, l'épaisseur de la plaque de matériau microporeux occupe la moitié de l'espace annulaire 5 entre les deux tubes coaxiaux.

Pour une épaisseur de 15 mm et un espace annulaire de 30 mm autour d'un tube interne 1 d'épaisseur courante (13 mm) pour une section de passage de fluide de 430 mm de diamètre, elle laisse libre une épaisseur équivalente de volume d'air au voisinage du tube externe 2.

C'est par circulation longitudinale dans cet espace laissé libre que l'on crée un vide partiel extrayant l'air contenu dans les pores ouverts du matériau microporeux à travers le tissu qui l'enveloppe. Le vide est réalisé jusqu'à faire régner une pression réduite de l'ordre de 50 millibars, par aspiration au moyen d'un piquage provisoirement branché sur un trou ménagé à l'une des extrémités d'un tuyau, trou qui est ensuite fermé par un joint de soudure.

Comme il est classique, les tubes 1 et 2, de même que les viroles d'extrémité 4, de forme globalement conique, sont réalisés en acier.

Le tube interne 1 peut avantageusement comporter un revêtement complémentaire de sa paroi externe choisi pour présenter des propriétés s'opposant au glissement longitudinal du matériau microporeux plaqué contre elle. En variante ou en complément, on peut trouver intérêt, plus particulièrement pour les opérations de montage, à assurer une adhérence des bords de chaque plaque de matériau microporeux là où ils se rejoignent, tout le long de la génératrice correspondante du tube interne.

D'autre part, on a fait apparaître sur la figure une feuille intermédiaire 13 qui est enroulée extérieurement autour de chaque plaque isolante 7, 8, 9 de matériau microporeux. Son propos est de protéger l'enveloppe de tissu de ce matériau des dégradations qu'elle pourrait subir lors de l'enfilage du tube externe sur le tube interne déjà équipé desdites plaques et des épaisseurs 12.

Cette feuille 13 est représentée constituée d'une nappe de matière organique revêtue d'aluminium sur sa face extérieure. Mais il est mieux d'utiliser une feuille de polyéthylène de 0,2 mm d'épaisseur fermée par collage le long d'une génératrice du tuyau. L'emploi d'une feuille en matière rétractable a l'avantage d'assurer un bon couplage de la plaque isolante avec le tube interne du point de vue des vibrations mécaniques.

Suivant l'un des exemples de réalisation pratique des tuyaux décrits et représentés, tels qu'ils sont préfabriqués en usine, la partie courante de chaque tuyau est constituée d'un tube interne 1 présentant un diamètre extérieur de 219 mm et une épaisseur de paroi de 13 mm et d'un tube externe 2 de 249 mm de diamètre intérieur et de 11 mm d'épaisseur de paroi.

Pour chaque tuyau, le tube externe est enfilé autour du tube interne après que celui-ci ait été équipé d'abord des espaceurs 12, puis des plaques de matériau microporeux 7, 8, 9, présentant chacune une épaisseur constante de 12 mm, sous une largeur équivalente au pourtour périphérique du tube interne et une longueur de 40 centimètres. Ce matériau présente une porosité à 90 % d'espaces vides, essentiellement en pores ouverts de diamètre moyen inférieur à 0,1 micron, et une masse volumique de 255 kg/m³.

On procède ensuite à la mise sous vide par la couche de 3 mm d'épaisseur moyenne laissée libre au voisinage du tube externe, jusqu'à une pression réduite le 50 millibars, comme ci-dessus.

La même couche, qui autorise une circulation gazeuse dans le sens longitudinal et permet de créer le vide partiel au sein du matériau microporeux dans le sens transversal, peut conserver une utilité ultérieurement, une fois les tuyaux successifs raccordés en une canalisation sous-marine.

Cette possibilité sera maintenant illustrée en se référant à une variante de construction d'une canalisation à partir d'un tuyau suivant l'invention. Conformément à cette variante le tuyau est réalisé sur de grandes longueurs en usine et transporté enroulé sur lui-même jusqu'au site de mise en place, éventuellement là aussi situé en pleine mer.

Qu'il y ait lieu ou non à raccordement de tubes successifs, un tuyau complet se présente d'une seule pièce, avec un espace annulaire tout du long pour l'isolation thermique.

Une fois un tel tuyau mis en place, le passage de circulation gazeuse reste accessible de l'une ou l'autre des extrémités de la canalisation pour faire varier le degré de vide au cours de la vie de cette dernière, faire varier en conséquence l'efficacité d'isolation.

Cette possibilité se révèle particulièrement utile dans le domaine pétrolier, car les effluents d'un champ producteur voient leurs températures varier au fur et à mesure de l'exploitation des puits, ainsi d'ailleurs que d'autres conditions de fonctionnement, telles que le débit et la composition physique et chimique de l'effluent véhiculé par la canalisation.

Dans un exemple pratique, on commence par régler l'efficacité d'isolation thermique à une valeur relativement faible, pour les périodes d'exploitation où l'effluent pénètre dans la canalisation par exemple à 150 °C. La réalisation d'un coefficient d'isolation thermique global ("Overall Heat Transfer Coefficient" en anglais) de l'ordre de 2 à 5 W/m² par °C permet de limiter les phénomènes de dilation longitudinale du tube interne, tout en préservant à l'effluent une température au moins égale à 40 °C jusqu'à sa sortie de la canalisation.

En fin de vie du champ producteur, la température de l'effluent à l'entrée de la canalisation s'abaisse sensiblement, et il devient utile d'améliorer le coefficient d'isolation thermique global, jusqu'à par exemple 0,5 W/m² par °C, pour conserver en sortie de la canalisation, la même température, dans un compromis entre les soucis d'ordre économique et le besoin d'éviter la formation de condensats indésirables tout au long du trajet suivi par l'effluent dans la canalisation.

Dans de telles circonstances, on a donc intérêt à choisir, dimensionner et disposer les éléments constitutifs du tuyau suivant l'invention de manière qu'il soit adapté à générer un coefficient d'isolation thermique global compris entre 0,5 W/m².°C et 1 W/m².°C quand on fait régner dans la double enveloppe du tuyau une dépression de l'ordre de 1 à 100 mbar, pouvant évenuellement ne pas dépasser une valeur de pression réduite de l'ordre de 900 mbars, et que l'on puisse néanmoins exploiter la présence des passages longitudinaux libres à la circulation de l'air pour créer au contraire une surpression, la pression dans l'espace annulaire entre les tubes coaxiaux (y compris le matériau microporeux) pouvant alors atteindre 50 bars par exemple.

Dans un tel exemple, l'invention se traduit par un procédé d'utilisation d'un tuyau ainsi constitué, essentiellement caractérisé par le fait qu'on fait varier la pression régnant dans ledit espace annulaire entre des valeurs pouvant atteindre 50 bars en début de vie d'une canalisation formée par ledit tuyau, et des valeurs comprises entre 1 mbar et 900 mbar en fin de vie de la canalisation. On peut ainsi faire varier le coefficient d'isolation thermique global entre 0,5 W/m².°C et 5 W/m².°C, pour une épaisseur de plaque de matériau microporeux de l'ordre de 10 à 14 mm et une couche annulaire de circulation longitudinale de gaz présentant une épaisseur radiale moyenne comprise entre 1 et 5 millimètres.

Dans un cas comme dans l'autre, l'air supposé présent dans l'espace annulaire, y compris dans les pores du matériau microporeux, peut être remplacé par un autre gaz, tel qu'un gaz neutre comme l'argon, afin d'améliorer encore les qualités recherchées, pour les mêmes natures et dimensions des éléments constitutifs.

## Revendications

1. Tuyau à double enveloppe pour canalisations, notamment pour canalisations de produits pétroliers à poser en mer, caractérisé en ce que, dans un espace annulaire étanche (5) entre un tube interne (1) et un tube externe (2) disposés coaxialement l'un dans l'autre, il comporte une plaque autoportante (7,8,9) de matériau microporeux à pores ouverts, présentant une flexibilité suffisante pour être enroulée contre le tube interne (1), et en ce qu'il est réservé hors ledit matériau dans ledit espace annulaire, un passage libre à une circulation longitudinale de gaz par lequel on fait régner une pression réduite tout au long dudit espace annulaire.

2. Tuyau suivant la revendication 1, caractérisé en ce que ledit passage se présente sous la forme d'une couche annulaire laissée libre entre la plaque de matériau microporeux et la paroi interne du tube externe. l'épaisseur de ladite plaque étant inférieure à celle dudit espace annulaire (5).

3. Tuyau suivant la revendication 1 ou 2, caractérisé en ce que ladite pression réduite est comprise entre 0,5 et 100 millibars.

4. Tuyau suivant la revendication 1, 2 ou 3, caractérisé en ce que ledit matériau microporeux est sous forme de plaques isolantes à base céramique réparties sur la longueur du tuyau.

5. Tuyau suivant la revendication 4, caractérisé en ce que le matériau desdites plaques est fait d'un mélange de poudre silicique et de fibres de renforcement céramiques, le tout compacté en une structure tridimensionnelle cohérente de fines particules qui est retenue dans une enveloppe non étanche.

6. Tuyau suivant la revendication 5, caractérisé en ce que ladite enveloppe est constituée d'un tissu de fibres de coton, de préférence non tissées.

7. Tuyau suivant l'une quelconque des revendications 4 à 6, caractérisé en ce que ledit matériau microporeux est constitué d'un mélange d'une majeure partie formée de silice avec une mineure partie formée de dioxyde de titane.

8. Tuyau suivant la revendication 7, caractérisé en ce que la proportion de dioxyde de titane dans ledit matériau est comprise entre 30 à 35 % en poids pour 60 à 70 % en poids de silice, par rapport au poids total de sa composition.

9. Tuyau suivant l'une quelconque des revendications 1 à 8, caractérisé en ce que les pores du matériau constituant ladite plaque sont ouverts pour 85 à 95 % de leur volume global, sous un diamètre de pores moyen inférieur ou au plus égal à 0,1 micron.

10. Tuyau suivant la revendication 2, éventuellement combinée avec l'une quelconque des revendications 3 à 9, caractérisé en ce que la couche laissée libre contre ledit tube externe (2) par la plaque de matériau microporeux présente une épaisseur moyenne comprise entre 0,5 et 5 millimètres.

11. Tuyau suivant l'une quelconque des revendications 1 à 10, caractérisé en ce qu'il comporte des espaceurs de centrage dudit tube interne (1) dans ledit tube externe (2), régulièrement répartis serrés fixes sur ledit tube interne (1) sur la longueur du tuyau, qui forment des éléments de renforcement et des butées longitudinales pour des plaques distinctes dudit matériau microporeux.

12. Tuyau suivant l'une quelconque des revendications 1 à 11, caractérisé en ce qu'il comporte une feuille (13) de protection de ladite plaque (7,8,9) qui est plaquée extérieurement autour de ladite plaque et qui, de préférence, présente un faible coefficient de friction en surface.

13. Tuyau suivant la revendication 12, caractérisé en ce que ladite feuille (13) est en matière rétractable favorisant un couplage de ladite plaque avec ledit tube interne du point de vue des vibrations mécaniques.

14. Tuyau suivant l'une quelconque des revendications 1 à 13, caractérisé en ce qu'il comporte au moins une feuille à effet anti-radiatif, interposée entre ledit tube interne (1) et ledit tube externe (2), en coopération avec ladite plaque (7,8,9) de matériau microporeux et ledit passage laissé libre sous pression réduite.

15. Tuyau suivant l'une quelconque des revendications 1 à 14, caractérisé en ce ledit tube interne est un tube d'acier qui est enfilé sur le tube interne, également en acier, préalablement équipé de ladite plaque de matériau microporeux, l'espace annulaire étant ensuite fermé étanche aux extrémités du tuyau au moyen d'une virole intermédiaire entre lesdits tubes coaxiaux.

16. Procédé d'utilisation d'un tuyau suivant l'une quelconque des revendications 1 à 15, caractérisé par le fait qu'au cours de la vie d'une canalisation formée par ledit tuyau, on fait varier la pression régnant dans ledit espace annulaire entre des valeurs pouvant atteindre 50 bars et des valeurs comprises entre 1 mbar et 900 mbar, pour faire varier le coefficient d'isolation thermique global entre l'intérieur et l'extérieur du tuyau entre 0,5 W/m².°C et 5 W/m².°C, l'épaisseur de ladite plaque de matériau microporeux étant de l'ordre de 10 à 14 mm et une couche de circulation longitudinale de gaz suivant la revendication 2 étant ménagée sous une épaisseur moyenne comprise entre 1 et 5 millimètres.

## Patentansprüche

1. Doppelt ummanteltes Rohr für Röhrensysteme, insbesondere die Röhrensysteme, die auf dem Meeresboden zum Transport Mineralölerzeugnisse verlegt werden, dadurch gekennzeichnet, daß es in einem abgedichteten ringförmigen Zwischenraum (5) zwischen einem innen (1) und einem außen (2) koaxial verlaufenden, miteinander verbundenen Rohr eine selbsttragende Platte (7, 8, 9) aus mikroporösem Material mit offenen Poren aufweist, die ausreichend flexibel ist, daß sie um die innere Röhre (1) gewickelt werden kann, und daß außerhalb des gennannten Materials im genannten ringförmingen Zwischenreaum ein Freiraum zur longitudinalen Zirkulation von Gas ausgespart ist, durch den man auf der gesamten Länge des gennannten ringförmigen Zwischenraums einen verminderten Druck aufrecht erhält.

2. Rohr nach Anspruch 1, dadurch gekennzeichnet, daß genannter Freiraum aus einem ringförming verlaufenden Spiel zwischen der Platte aus Mikroporösem Material und der Innenwand des außen verlaufenden Rohres gebildet wird, wobei die Stärke gennanter Platte kleiner als die genanntes ringförmigen Zwischenraums (5) ist.

3. Rohr nach Anspruch 1 oder 2, dadurch gekennzeichnet, daß gennanter verminderte Druck von 0,5 bis 100 mb ausdrückt.

4. Rohr nach Anspruch 1, 2 oder 3, dadurch gekennzeichnet, daß gennantes mikroporöse Material am Rohr entlang handelsübliche Dämmstoffplatten auf Keramik ist.

5. Rohr nach Anspruch 4, dadurch gekennzeichnet, daß der Werkstoff gennannter Platten aus einer Mischung aus Kieselerdepulver und keramisch verstärkten Fasern besteht, die zu einer kohärenten dreidimensionalen Struktur aus feinen Partikeln in einem undichten Mantel verdichtet wird.

6. Rohr nach Anspruch 5, dadurch gekennzeichnet, daß gennanter Mantel aus einem vorzugsweise nicht gewebten Baumwollfasergewebe gebildet wird.

7. Rohr nach einem der Ansprüche 4 bis 6, dadurch gekennzeichnet, daß gennantes mikroporöse Material aus einer überwiegend aus Kieselsäureanhydrid bestehenden Mischung gebildet wird, der ein wenig Titandioxid beigegeben ist.

8. Rohr nach Anspruch 7, dadurch gekennzeichnet, daß das Titandioxid im gennanten Material ein in Bezug auf das gesamten Gewicht seiner Mischung Gewicht von bis zu 30 bis 35% erreichen kann, bei 60 bis 70% Gewicht für Keiselsäureandydrid.

9. Rohr nach einem der Ansprüche 1 bis 8, dadurch gekennzeichnet, daß die Poren des gennannte Platte bildenden Materiales zwischen 85 und 95% ihres Gesamtvolumens offen sind, mit einen mittleren Porendurchmesser, der kleiner oder höchstens gliche 0,1 µ ist.

10. Rohr nach Anspruch 2, gegebenenfalls auch nach eineim der Ansprüche 3 bis 9, dadurch gekennzeichnet, daß die von der Platte aus mikroporösem Material freigelassene Schicht auf genannter äußeren Röhre (2) mit mittlere Stärke zwischen 0,5 und 5mm hat.

11. Rohr nach einem der Ansprüche 1 bis 10, dadurch gekennzeichnet, daß Abstandshalter vorgesehen sind, die eine Zentrierung genannter inneren Röhre (1) innerhalb gennanter äußeren Röhre (2) sicherstellen, die auf genanntem Innenrohr (1) auf der Gesamtlänge des Rohrs befestigt werden, so daß sie zugleich verstärkte Stücke und longitudinale Anschläge für verschiedene Platten aus genanntem mikroporösen Material bilden.

12. Rohr nach einem der Ansprüche 1 bis 11, dadurch gekennzeichnet, daß eine Zwischenfolie (13) vorgesehen ist, um genannter Platte (7, 8, 9) zu schützen, die um genannte Platte gewickelt ist und die bevorzugseweise einen schwachen Oberflächenreibungs-koeffizienten hat.

13. Rohr nach Anspruch 12, dadurch gekennzeichnet, daß genannte Zwischenfolie (13) aus retraktablem Material ist, um hinsichtlich mechanischer Vibrationen eine feste Verbindung genannter Platte mit genannter inneren Röhre sicherzustellen.

14. Rohr nach einem der Ansprüche 1 bis 13, dadurch gekennzeichnet, daß es mindestens aus eine solche Folie mit antistatischer Wirkung besteht, die zwischen genanntem innen Rohr (1) und gennantem außen Rohr (2) vorgesehen ist, und mit genannter Platte (7, 8, 9) aus mikroporösem Material und genanntem Freiraum unter verminderter Druck mitwirkend ist.

15. Rohr nach einem der Ansprüche 1 bis 14, dadurch gekennzeichnet, daß genanntes innen Rohr aus Stahl besteht, das in das auch aus Stahl außen Rohr geschoben ist, das außen Rohr mit genannter Platte aux mikroporösem Material vorher vorgesehen wird und der ringförmigen Freiraum an beiden Enden der Rohre dank einem befestigten Zwischenring zwischen gennanten koaxialen Rohren abgedict geschlossen.

16. Anwendungsverfahren eines Rohres nach einem der Ansprüche 1 bis 15, dadurch gekennzeichnet, daß man den Druck im erwähnten ringförmigen Zwischenraum zwischen Werten von bis zu 50 bar frei Funktionsaufnahme eines aus den erwähnten Rohren gebildeten Röhrensystems und Werten von 1 mbar bis 900 mbar mit auslaufender Nutzung des Röhrensystems variieren kann, so kann sich der pauschale Wärmedämmungskoeffizient zwischen des Rohrinnen und -aussen bei einer Stärke der Platten aus mikroporösem Material von 10 bis 14 mm und einer ringförmigen longitudinalen Zirkulationsschicht des Gases nach Anspruch 2 mit mittlerer radialer Stärke von 1 bis 5 mm zwischen 0,5 W/m².°C und 5 W/m².°C bewegen.

## Claims

1. A double casing pipe to be especially used in offshore oil pipelines, characterised in that, in an annular sealed space (5) located between an inner tube (1) and an outer tube (2) both coaxially arranged inside each other, there is included a self-sustaining plate (7, 8, 9) made of open pore-microporos material, which is flexible enough to be wound around the inner tube (1), and in that there is provided outside said material within said annular space, a free passageway to allow longitudinal gas flow whereby low pressure is maintained throughout said annular space.

2. A pipe according to claim 1, characterised in that said passageway is in the form of an annular layer which remains free between the plate of microporous material and the inner wall of the outer tube, said plate being inferior in thickness to said annular space (5).

3. A pipe according to claims 1 or 2, characterised in that said low pressure is comprised between 0,5 and 100 millibars.

4. A pipe according to claims 1, 2, or 3, characterised in that said microporous material is in the form of ceramic-based insulation plates arranged throughout the pipe.

5. A pipe according to claim 4, characterised in that the material of said plates consists of a mixture of siliceous powder and ceramic reinforcing fibbers, said combination being compacted into a coherent three dimensional structure made up of fine particles which is enclosed inside a non tight casing.

6. A pipe according to claim 5, characterised in that said casing consist of a cotton fibber tissue, preferably of a non-woven type.

7. A pipe according to anyone of claims 4 to 6, characterised in that said microporous material consists of a mixture containing a major portion of silica with a minor portion of titanium dioxide.

8. A pipe according to claim 7, characterised in that the portion of titanium dioxide present in said material is comprised between 30 an 35% by wt. for a silica content of 60 to 70% by wt., based on total weight of the composition thereof.

9. A pipe according to anyone of claims 1 to 8, characterised in that the portion of open pores in the material forming said plate is 85 to 95% based on total pore volume, with an average pore diameter less than or equal to 0,1 µm.

10. A pipe according to claim 2, when optionally combined with anyone of claims 3 to 9, characterised in that the layer which is left free along said outer tube (2) by the plate of microporous material has an average thickness ranging from 0,5 to 5 mm.

11. A pipe according to anyone of claims 1 to 10, characterised in that it comprises centering spacers between said inner tube (1) and said outer tube (2), regularly arranged in tight fit on said inner tube (1) throughout the pipe, which form reinforcing elements and longitudinal thrust-blocks for individual plates of said microporous material.

12. A pipe according to anyone of claims 1 to 11, characterised in that it includes a foil (13) for protecting said plate (7, 8, 9) which is circumferentially applied around said plate and which, preferably, has a low surface friction factor.

13. A pipe according to claim 12, characterised in that said foil (13) is made of shrink material that promotes mechanical vibration coupling of said plate to said inner tube.

14. A pipe according to anyone of claims 1 to 13, characterised in that it includes at least one anti-radiant foil, interposed between said inner tube (1) and said outer tube (2) and co-acting with said plate (7, 8, 9) of microporous material and low pressure free passageway.

15. A pipe according to anyone of claims 1 to 14, characterised in that said outer tube is a steel tube which is fitted externally along an also steel inner tube, previously provided with said plate of microporous material, the annular space being subsequently hermetically sealed at both ends of the pipe by means of an in-between ferrule located between said coaxial tubes.

16. A method for using a pipe according to anyone of claims 1 to 5, characterised in that during the service lifetime of a pipeline made from said pipe, the pressure generated within said annular space is varied between values up to 50 bars and values in the range of 1 mbar to 900 mbar, in order to vary the outward overall heat transfer coefficient of said pipe in the range of 0,5 W/m2.°C to 5 W/m2.°C, the thickness of said plate of microporous material being chosen to lie in the range of 10 to 14 mm, and a longitudinal gas flow layer according to claim 2 is provided with a mean thickness in the range of 1 to 5 mm.
